# EUROPEAN PATENT SPECIFICATION

(11) **EP 1 364 761 B1**
(45) Date of publication and mention of the grant of the patent: **29.07.2009**
(21) Application number: 03003789.9
(22) Date of filing: 19.02.2003
(51) Int. Cl.: B29C 33/62

(54) **Aqueous release agent composition for molding polyurethane foam**
Wasserige Trennmittelzusammensetzung zum Formen von Polyurethanschaum
Composition aqueuse d'un agent de démoulage pour le moulage de mousses de polyuréthane

(30) Priority: 17.05.2002 JP 2002142825; 24.09.2002 JP 2002278098
(43) Date of publication of application: 26.11.2003
(73) Proprietor: Chukyo Yushi Co., Ltd., Nagoya, 454-0037 (JP)
(72) Inventor: Chikazawa Masateru, Ogaki-city Gifu-pref. 503-0857 (JP); MIZUNO Haruyuki, Meito-ku Nagoya 465-0093 (JP)
(74) Representative: Müller Fottner Steinecke

(56) References cited:
- DATABASE WPI Section Ch, Week 199437 Derwent Publications Ltd., London, GB; Class A25, AN 1994-299248 XP002251802 & JP 06 226752 A (KONISHI CO LTD), 16 August 1994 (1994-08-16)
- PATENT ABSTRACTS OF JAPAN vol. 1997, no. 10, 31 October 1997 (1997-10-31) & JP 09 141671 A (CHUKYO YUSHI KK), 3 June 1997 (1997-06-03)
- PATENT ABSTRACTS OF JAPAN vol. 010, no. 246 (M-510), 23 August 1986 (1986-08-23) & JP 61 076324 A (YUSHIRO DO BRAZIL IND CHEM LTD), 18 April 1986 (1986-04-18)
- PATENT ABSTRACTS OF JAPAN vol. 2000, no. 21, 3 August 2001 (2001-08-03) & JP 2001 096542 A (NEOS CO LTD), 10 April 2001 (2001-04-10)
- PATENT ABSTRACTS OF JAPAN vol. 012, no. 103 (C-485), 5 April 1988 (1988-04-05) & JP 62 234015 A (LION CORP), 14 October 1987 (1987-10-14)

## Description

### BACKGROUND OF THE INVENTION

### 1.Field of the Invention

The present invention relates to an aqueous release agent composition for molding polyurethane foam.

### 2. Description of related art

As a release agent for molding polyurethane foam, solvent based release agents have been used for a long time, however, an aqueous release agent has been proposed as a substitute for the above-described solvent based release agents from the viewpoints of problems such as flammability of an organic solvent, working environment and the like (see Japanese Unexamined Patent Publication No.H09-141671 gazette).

In the invention disclosed in the above-described patent publication gazette, in an aqueous release agent their attention has been exclusively turned to, a film forming agent comprising naphthenic hydrocarbon compounds or paraffin based hydrocarbon compounds, and its improvement has been contemplated, thereby providing a release agent which is soluble in water and provides excellent release performance and work performance.

### SUMMARY OF THE INVENTION

When the present inventors made every effort to consider an aqueous release agent, the present inventors were aware of being insufficiencies for the consideration of surfactants used for this release agent.

As far as the present inventors know, it is general that as a surfactant agent contained in a release agent for molding polyurethane foam, a volatile aliphatic amine salt such as morpholine stearate or the like has been used (cf. JP-A-6 226 752). However, in the case of a surfactant comprising such morpholine stearate, large amounts have been used for the purpose of stabilizing the release agent. For example, 20-50 weight portions of morpholine stearate has been required with respect to 100 weight portions of the release component. However, if the usage amount of a surfactant becomes large, a negative influence upon the release performance of the release agent is feared

On the other hand, as a cationic surfactant, an inorganic acid salts (hydrochloride or the like) of alkyl amine or a lower carbon salt (acetic acid salt or the like) are known. However, when the former is used as a release agent for molding polyurethane foam, the corrosiveness against the mold becomes a problem. In the case of the latter, that has a irritating smell, a problem arises from the viewpoint of the work environment.

It should be noted it is feared that a problem of the work environment might also occur in the case where a large amount of morpholine stearate is comprised in the agent composition since that morpholine stearate is volatile.

Furthermore, since a film forming agent comprising the naphthenic hydrocarbon compound or paraffin based hydrocarbon compound, in general, also has volatility, it is feared that the problem of the work environment may occur from the viewpoint of this, also.

The present invention has been made so as to solve at least one of the above-described problems and is described as follows:
aqueous release agent composition for molding polyurethane foam comprises,
an amino acid salt of alkyl amine,
a release substance, and
a forming film agent.

Hereinafter, the present invention will be described in detail.

### (Amino acid salt of alkyl amine)

It is preferable that the blending amount of amino acid salt of alkyl amine with respect to 100 weight portions of a release component (substance having release nature: wax or the like, the detail of this will be described later) is made in the range of 1-50 weight portions. If the blending amount of amino acid salt of alkyl amine is less than one weight portion, the emulsified matter is not capable of being formed and if the blending amount of it exceeds over 50 weight portions, the release performance of the release agent is lowered, therefore neither of these are preferred.

A further preferred blending amount of amino acid salt of alkyl amine with respect to 100 weight portions of a release component is in the range of 1-20 weight portions, and a still further preferred blending amount of amino acid salt of alkyl amine with respect to 100 weight portions of the release component is in the range of 3-10 weight portions.

In this way, when the amino acid salt of alkyl amine of the present invention is utilized as a surfactant, the usage amount of it is capable of being reduced compared to morpholine stearate used in the conventional examples. According to the considerations of the present inventors, the release agent could be stabilized with the usage amount of approximately 1/3-1/5 (weight ratio) of morpholine stearate used in the conventional example according to cationic surfactant of the present invention.

It is preferable that the number of carbons of an alkyl group of alkyl amine in the range from 12 to 24. If the number of carbons of alkyl group is less than 12, the emulsification becomes unstable and the stability of the release agent is lowered. On the other hand, if the number of carbons of the alkyl group exceeds over 24, the emulsification is insufficient, and it is feared that the components of the release agent may separate.

The alkyl group may be available if it is straight chain or branched.

In general, amino acid is a solid weak acid, and it seldom corrodes the metal of the mold or the like. Moreover, since amino acid has no irritating smell as acid does, it does not adversely affect the work environment.

According to the considerations by the present inventors, amino acid having two carboxyl groups is preferable among amino acids, in particular, it is preferable that one of or both of aspartic acid and glutamic acid, which are acidic amino acids, is employed.

By the existence of this amino acid, a surfactant of this present invention becomes a cationic surfactant.

When a surfactant comprising such an amino acid salt of alkyl amine has been blended in an aqueous release agent composition for molding polyurethane foam, as shown in Example 1 (see Tables 1-3) or Example 7 (see Tables 4-6), excellent release performances (in release characteristic, cell opening characteristic, surface roughening, drying characteristic) and excellent workabilities (in odor and corrosiveness) were obtained.

On the other hand, in the case where morpholine stearate conventionally and universally has been utilized as a surfactant, in order to stabilize the release agent, it is required that the amount of the surfactant to be used should be over 3 times (weight ratio) more than that in the case of Example 1 (or Example 7) as shown in Comparative Example 1 (or Comparative Example 4). As a result, the release performance becomes inferior to that of Example 1 (or Example 7). Moreover, since morpholine, which is a volatile amine, is used in a large amount, the work environment is also inferior.

The drying characteristic which is particularly inferior in its performance in Comparative Example 1 (or Comparative Example 4) is, in general, capable of being resolved by adding a leveling agent and by preventing the release agent from forming droplets on a mold surface.

According to findings of the present inventors, even among non-ionic surfactants, some of them have a leveling performance, for example, the use of polyethylene glycol type non-ionic surfactant is preferable. Hence, the relevant non-ionic surfactant has been added in Examples 2-4 (or Examples 8-10), the leveling characteristic was enhanced, thereby the enhancement of the drying characteristic being observed.

By further considerations of the present inventors, in the polyethylene glycol type non-ionic surfactant, it is preferable that the additional number of ethylene oxide in the range from 1 to 15 moles and it is further preferable that it is in the range from 5 to 10 moles. If the additional number of ethylene oxide exceeds 15 moles, since ethylene oxide group is reacted with isocyanate and the release characteristic is made worse, it is not preferable (see Comparative Example 3 or Comparative Example 6).

Moreover, when the additional number of ethylene oxide becomes 5 moles or more, it was understood that it largely contributes to the enhancement of the leveling characteristic.

It is preferable that the polyethylene glycol type non-ionic surfactant is blended in combination with amino acid salt of alkyl amine in total in the range from 1 to 100 weight portions with respect to 100 weight portions of the release component. It is more preferable that the total in the range from 5 to 50 weight portions of them is blended. It is still more preferable that the total in the range from 5 to 40 weight portions is blended. It is preferable that the blending ratio of amino acid salt of alkyl amine and polyethylene glycol type non-ionic surfactant is made in the range from 1:0 to 1:10. It is more preferable that it is in the range from 1:1 to 1:5.

As the polyethylene glycol type non-ionic surfactant, ethylene oxide adducts such as alkyl amine, higher alcohol, alkyl phenol, alphatic amide, polypropylene glycol, fats and fatty oils, polyvalent alcohol aliphatic ester, fatty acid and the like are listed.

In the polyethylene glycol type non-ionic surfactant, in the case of ethylene oxide adduct of alkyl amine, when the additional number of ethylene oxide is small, the large difference with alkyl amine (without ethylene oxide adduct) does not occur from the viewpoint of the reactivity with amino acid (generation of salt). For example, as shown in Example 5 (or Example 11), when alkyl amine whose additional number of ethylene oxide is one mole was used, almost the same performance as Example 1 (or Example 7) was obtained.

According to the considerations of the present inventors, when the additional amount of ethylene oxide with respect to alkyl amine is less than 5 moles, more preferably one mole or less, it is considered that although the relevant ethylene oxide is added, amino acid salt is formed and it is effective as a cationic surfactant.

From the description described above, if the present invention is observed from another viewpoint, the present invention is described in that amino acid is selected as its acid component when a cationic surfactant is employed in an aqueous release agent composition for molding polyurethane foam.

As already described above, amino acid is preferable from the viewpoint of the work environment since its corrosiveness with respect to the metal such as the mold or the like is slight and it has no irritating smell.

As such an amino acid, an amino acid having two carboxyl groups is preferable, and among these, glutamic acid and/or asparaginic acid, which are acidic amino acids, are preferable.

In a cationic surfactant, it is preferable that the basic side is made alkyl amine, and it is preferable that the number of carbon atoms of alkyl group is in the range from 12 to 24. If the number of carbons of the alkyl group is less than 12, the emulsification becomes unstable and the stability of the release agent is lowered. On the other hand, if the number of carbon atoms exceeds 24, the emulsification is insufficient, and it is feared that components of the release agent may become separated.

The alkyl group may be available if it is straight chain or branched.

Less than 5 moles of ethylene oxide, more preferably one mole or less of ethylene oxide may be added to this alkyl amine.

The following components are blended in an aqueous release agent for molding polyurethane foam.

### (Release substance)

A release substance referred to in the present invention is, for example, as a straight chain wax, a straight chain polyethylene wax, a highly pure purified paraffin wax, fishertropsch and the like are listed. It is preferable that the average molecular amount of a straight chain wax is in the range from 500 to 1000. Moreover, it is more preferable that it contains 50% or more with respect to the total release characteristic substance. Carnauba wax, montan wax, microcrystalline wax, branched polyethylene wax, silicon and the like is capable of being used, however, it is preferable that the blending ratio of these is less than 50%.

### (Film forming agent)

A film forming agent is referred to as a substance for resolving one portion of or the whole of the release component by the temperature of the mold surface and making it in a uniform film shape after the release agent is coated on the mold. If the relevant film forming agent is not added, the release agent film is in a state where powder is attached, when the urethane raw material is injected, the film cannot be maintained due to that impact, and it causes cell roughening and voids. In a urethane molding, since urethane raw material is injected immediately after the release agent was applied, it is necessary to swiftly form the release agent film. Therefore, it is preferable that the film forming agent is a substance in a liquid at 40-80°C or less which is the temperature of mold at the time when a urethane is generally molded and it is more preferable that it is a substance in a liquid state at 20°C.

Moreover, in order to function as a film forming agent, in this case, the resolvability with the release component is important, hydrocarbon compound containing hydrophilic group having a hydroxyl group, carboxyl group or the like is not suitable for a film forming agent of the present invention. Hence, similarly to the release component, a hydrophobic hydrocarbon compound is available, and it is preferably a hydrocarbon compound in a liquid state at 20°C.

According to the first aspect of the present invention, a solvent based film forming agent is capable of being used. Such a film forming agent comprises naphthen based hydrocarbon compounds and paraffin based hydrocarbon compounds. The additional amount of such a film forming agent is preferably in the range from 50 to 500 weight portions with respect to 100 weight portions of substance having the release characteristic. In the case where the additional amount is less than 50 weight portions, regular molecular sequence of the substance having release characteristic is not sufficiently performed, and cell opening characteristic of the molded product becomes worse. If the additional amount exceeds 500 weight portions, the emulsion necessary for emulsification is required even more and the bad influence of the emulsion appears and the cell opening characteristic of the molded product is lowered.

For a solvent based film forming agent, an organic compound whose boiling point is in the range from 150 to 250°C is suitable. For example, (a) as hydrocarbons, nonane, decane, undecane, unbenzene, tetralin, isopropylbenzene, cyclohexylbenzene, paraffin based hydrocarbon mixture (number of carbon atoms 10-13), naphthenic hydrocarbon mixture (number of carbon atoms 11-13) and the like are listed, (b) as a halide, p-chlorotoluene, hexachloroethane, trichlorobenzene, bromobenzene, octyl bromide and the like are listed, and (c) as an ether, anisole, phenetole, cresylmethyl ether, ethylbenzyl ether, butylphenyl ether and the like are listed. Moreover, these compounds may be used in a mixture. It is more preferable that (a) these are hydrocarbons, among these, naphthenic hydrocarbon, paraffin based hydrocarbon and the mixture of paraffin based and naphthenic hydrocarbons are more preferable from the viewpoints of the safety to the human body and environment.

According to another aspect of the present invention, a non-solvent based film forming agent is capable of being used. As such a film forming agent, an organic compound whose vapor pressure at 20°C is less than 0.01 kPa is preferable. Since such a film forming agent is sufficiently low in its vapor pressure, it hardly volatilizes under the conditions of molding work of urethane foam.

As such a film forming agent, for example, as hydrocarbons,
(a) aromatic hydrocarbon mixture, (b) polycyclic aromatic hydrocarbon mixture, (c) paraffin based hydrocarbon mixture,
(d) naphthenic hydrocarbon mixture and the like, and (e) halogenation hydrocarbon and the like are listed. Preferably, (a) aromatic hydrocarbon mixture, (b) polycyclic aromatic hydrocarbon mixture, (c) paraffin based hydrocarbon mixture, and (d) naphthenic hydrocarbon mixture are listed, and these compounds may be used in a mixture. Moreover, these and some other than hydrocarbons may be mixed

It is preferable that the additional amount of non-solvent based film forming agent is in the range from 5 weight portions or more to less than 100 weight portions with respect to 100 weight portions of the substance having release characteristic. If the additional amount is less than 5 weight portions, the film forming of the substance having release characteristic is not sufficiently performed (see Comparative Example 5), and the cell opening characteristic of the molded product becomes worse. If the additional amount is 100 weight portions or more, the surface of the molded body is not capable of forming an open cell structure, and causes cell roughening and voids, thereby worsening the release characteristic (see Comparative Example 6). A more preferable blending amount of a film forming agent is in the range from 10 to 80 weight portions with respect to 100 weight portions of the substance having release characteristic. It is still more preferable that it is in the range from 20 to 50 weight portions.

### (Additive)

Furthermore, an aqueous release agent according to the present invention may contain an insecticide, a foam stabilizer, a wetting agent, a leveling agent, an antifoaming agent and the like as an additive of conventional small amount.

### (Method of manufacture)

Next, an example of a method for manufacturing an aqueous emulsion of the present invention will be described below. First, a material having release characteristic, solvent, and further the other components are added and heated, melted and mixed at 110-120°C. Then this is gradually added to an aqueous solution of surfactant at 90°C or more and simultaneously mixed by a homomixer to make an emulsion. Subsequently, a fine emulsion composition is made by treatment with a homogenizer. A stable emulsion composition is made by cooling the obtained emulsion to room temperature. It should be noted that in the above-described method, a substance having the release characteristic, solvent, other components may be mixed after each of these is separately emulsified.

### (Application to polyurethane foam manufacture step)

A release agent composition of the present invention, which is similar to general purpose release agent composition, is coated on the interior of the metal mold by spraying or other methods, and the film is formed within the interior of the relevant metal mold. Subsequently, urethane material is injected into the metal mold, and the molding steps are carried out.

As described above, in the present invention, as a cationic surfactant of an aqueous release agent composition for molding polyurethane foam, an amino acid salt of alkyl amine is employed. By using this, a release agent composition emulsion is capable of being stabilized with a small usage amount compared to anionic morpholine stearate which has been conventionally and generally used. Then, on the basis of the usage amount of the surfactant being suppressed, the release performance (release characteristic, cell-opening characteristic and the like) originally required for a release agent is to be enhanced.

It should be noted that as for alkyl amine, a small amount of ethylene oxide may be added to that.

Furthermore, when a non-solvent based one which is low in vapor pressure as a film forming agent has been employed, vaporization of organic materials from the release agent composition in the molding work of polyurethane foam are capable of being prevented, and the work environment is capable of being enhanced.

Moreover, according to the present invention, since a surfactant containing a volatile substance like morpholine stearate is not used, therefore, the work environment is also enhanced.

### Description of the Preferred Embodiments

Hereinafter, Examples and Comparative Examples are shown in order to make the present invention clearer.

In Examples and Comparative Examples listed in Table 1-Table 3, a solvent based film forming agent has been blended.

In Examples and Comparative Examples listed in Table 4-Table 6, a non-solvent based film forming agent has been blended.

**[Table 1]**

| **Examples and Comparative Examples** | | | | | | | | | |
|---|---|---|---|---|---|---|---|---|---|
| | Example 1 | Example 2 | Example 3 | Example 4 | Example 5 | Example 6 | Comparative Example 1 | Comparative Example 2 | Comparative Example 3 |
| Wax A | 2.0 | 2.0 | 2.0 | 2.0 | 2.0 | 2.0 | 2.0 | 2.5 | 2.0 |
| Wax B | 2.0 | 2.0 | 1.5 | 1.5 | 2.0 | 1.5 | 2.0 | 1.0 | 1.5 |
| Wax C | | | | | | | | 0.5 | |
| Wax D | | | 0.5 | 0.5 | | 0.5 | | | 0.5 |
| Hydrocarbon based solvent E | 10.0 | 5.0 | | 10.0 | 10.0 | 10.0 | 10.0 | | |
| Hydrocarbon based solvent F | | | 5.0 | | | | | 5.0 | 5.0 |
| Alkyl amine G | 0.3 | 0.2 | 0.2 | | | | | 0.3 | 0.3 |
| Alkyl amine H | | | | 0.2 | | | | | |
| Glutamic acid | 0.1 | | 0.1 | | 0.1 | | | | 0.1 |
| Asparaginic acid | | 0.1 | | 0.1 | | 0.1 | | | |
| Acetic acid | | | | | | | | 0.1 | |
| Alkyl amine ethylene Oxide adduct | | | | | 0.3 | 0.3 | | | |
| Alkyl amine ethylene Oxide adduct | | 0.1 | 0.1 | 0.1 | | 0.1 | | | |
| Higher alcohol ethylene oxide adduct | | | 0.5 | | | | | | |
| Higher alcohol ethylene oxide adduct | | | | 0.5 | | 0.5 | | 0.5 | |
| Higher alcohol ethylene oxide adduct | | | | | | | | | 0.5 |
| Alkylphenol ethylene oxide adduct | | 0.5 | | | | | | | |
| Morpholine stearate | | | | | | | 1.5 | | |
| Water | 85.6 | 90.1 | 90.1 | 85.1 | 85.6 | 85.0 | 84.5 | 90.1 | 90.1 |

**[Table 2]**

| Description of blending components on table 1 | |
|---|---|
| Wax A | Petrolite: "POLYWAX 500" |
| Wax B | Petrolite: "POLYWAX 655 |
| Wax C | Petrolite: "POLYWAX 850" |
| Wax D | Petrolite: "BE SQUARE 195A" |
| Hydrocarbon based solvent E | Exxon Mobile: "EXX0L D-40" |
| Hydrocarbon based solvent F | Shell Japan: "Shellzole D-70" |
| Alkyl amine G | Kaoh: "Farmin 86T" |
| Alkyl amine H | Kaoh: "Farmin 80" |
| Glutamic acid | Ajinomoto: "L-glutamic acid" |
| Asparaginic acid | Ajinomoto: "asparaginic acid" |
| Acetic acid | Kanto Chemical: "reagent chemical; acetic acid" |
| Alkyl amine ethylene Oxide adduct | Aoki Fats and Fatty Oils: "Brownon S-201" (EO=1)*1 |
| Alkyl amine ethylene Oxide adduct | Aoki Fats and Fatty Oils: "Brownon S-207" (EO=7) |
| Higher alcohol ethylene oxide adduct | Aoki Fats and Fatty Oils: "Brownon SR-707" (EO=7) |
| Higher alcohol ethylene oxide adduct . | Kaoh: "Emulgen 108" (EO=8) |
| Higher alcohol ethylene oxide adduct | Kaoh: "Emulgen 130K" (EO=30) |
| Alkylphenol ethylene oxide adduct | Aoki Fats and Fatty Oils: "Brownon N-510" (EO=10) |

| | |
|---|---|
| *1: EO represents ethylene oxide. The number represents additional mole number. | |

**[Table 3]**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| release characteristic (kg) | ⊚ | ⊚ | ⊚ | ⊚ | ⊚ | ⊚ | △ | ⊚ | × |
| cell-opening characteristic | ⊚ | ⊚ | ⊚ | ⊚ | ⊚ | ⊚ | ⊚ | ⊚ | × |
| surface roughening | ○ | ○ | ○ | ○ | ○ | ○ | △ | ○ | ○ |
| drying characteristic | △ | ○ | ○ | ○ | △ | ○ | × | ○ | ○ |
| smell | ○ | ○ | ○ | ○ | ○ | ○ | ○ | × | ○ |
| corrosiveness | ○ | ○ | ○ | ○ | ○ | ○ | ○ | × | ○ |

**[Table 4]**

| Examples and Comparative Examples | | | | | | | | | | | | |
|---|---|---|---|---|---|---|---|---|---|---|---|---|
| | Example 7 | Example 8 | Example 9 | Example 10 | Example 11 | Example 12 | Comparative Example 4 | Comparative Example 5 | Comparative Example 6 | Comparative Example 7 | Comparative Example 8 | Comparative Example 9 |
| Wax A | 2.5 | 2.0 | 2.0 | 2.0 | | 2.0 | 3.0 | 3.0 | 3.0 | 3.0 | 2.0 | 2.0 |
| Wax B | 2.0 | 2.0 | 1.5 | 1.5 | 2.0 | 2.0 | 2.0 | 1.0 | 1.5 | 2.0 | 2.0 | 2.0 |
| Wax C | | | | | 2.0 | | | 0.5 | | | | |
| Wax D | | | 0.5 | 0.5 | | 0.5 | | | 0.5 | | 0.5 | 0.5 |
| Film forming agent E | 3.0 | | | | 3.0 | | | | | | | |
| Film forming agent F | | 2.0 | | | | 2.0 | 2.0 | | | | | |
| Film forming agent G | | | 1.0 | | | | | | | | | |
| Film forming agent H | | | | 0.5 | | | | | | | | 10.0 |
| Hydrocarbon based solvent I | | | | | | | | 2.0 | | | | |
| Hydrocarbon based solvent J | | | | | | | | | 2.0 | 2.0 | | |
| Alkyl amine K | 0.3 | 0.2 | 0.2 | | | | | 0.3 | 0.3 | 0.3 | 0.2 | 0.2 |
| Alkyl amine L | | | | 0.2 | | | | | | | | |
| Glutamic acid | 0.1 | | 0.1 | | 0.1 | | | | 0.1 | 0.1 | 0.1 | 0.1 |
| Asparaginic acid | | 0.1 | | 0.1 | | 0.1 | | | | | | |
| Acetic acid | | | | | | | | 0.1 | | | | |
| Alkyl amine ethylene Oxide adduct | | | | | 0.3 | 0.3 | | | | | | |
| Alkyl amine ethylene Oxide adduct | | 0.1 | 0.1 | 0.1 | | 0.1 | | | | 0.1 | 0.1 | 0.1 |
| Higher alcohol ethylene oxide adduct | | | 0.5 | | | | | | | | 0.5 | 0.5 |
| Higher alcohol ethylene oxide adduct | | | | 0.5 | | 0.5 | | 0.5 | | 0.5 | | |
| Higher alcohol ethylene oxide adduct | | | | | | | | | 0.5 | | | |
| Alkylphenol ethylene oxide adduct | | 0.5 | | | | | | | | | | |
| Morpholine stearate | | | | | | | 1.5 | | | | | |
| Water | 92.1 | 94.1 | 94.1 | 94.6 | 92.6 | 92.5 | 91.5 | 92.6 | 92.1 | 92.0 | 94.6 | 84.6 |

**[Table 5]**

| Description of blending components on table 4 | |
|---|---|
| Wax A | Petrolite: "POLYWAX 500" |
| Wax B | Petrolite: "POLYWAX 655 |
| Wax C | Petrolite: "POLYWAX 850" |
| Wax D | Petrolite: "BE SQUARE 195A" |
| Film forming agent E | Exxon Mobile: "EXXOL D-110" vapor pressure (/20°C):less than 0.01 kPa |
| Film forming agent F | Exxon Mobile: "EXXOL D-130" vapor pressure (/20°C):less than 0.01 kPa |
| Film forming agent G | Nihon Sekiyu Chemical{}: "Hizol SAS-296" vapor pressure (/20°C):less than 0.01 kPa |
| Film forming agent H | Exxon Mobile: "CRYSTOL 70" vapor pressure (/20°C):less than 0.01 kPa |
| Hydrocarbon based solvent I | Exxon Mobile: "EXXOL D-40" vapor pressure (/20°C): 0.183 kPa |
| Hydrocarbon based solvent J | Exxon Mobile: "Isopar L" vapor pressure (/20°C): 0.03 kPa |
| Alkyl amine K | Kaoh: "Farmin 86T" |
| Alkyl amine L | Kaoh: "Farmin 80" |
| Glutamic acid | Ajinomoto: "L-glutamic acid" |
| Asparaginic acid | Ajinomoto: "asparaginic acid" |
| Acetic acid | Kanto Chemical: "reagent chemical; acetic acid" |
| Alkyl amine ethylene Oxide adduct | Aoki Fats and Fatty Oils: "Brownon S-201" (EO=1)*1 |
| Alkyl amine ethylene Oxide adduct | Aoki Fats and Fatty Oils: "Brownon S-207" (EO=7) |
| Higher alcohol ethylene oxide adduct | Aoki Fats and Fatty Oils: "Brownon SR-707" (EO=7) |
| Higher alcohol ethylene oxide adduct | Kaoh: "Emulgen 108" (EO=8) |
| Higher alcohol ethylene oxide adduct | Kaoh: "Emulgen 130K" (EO=30) |
| Alkylphenol ethylene oxide adduct | Aoki Fats and Fatty Oils: "Brownon N-510" (EO=10) |

| | |
|---|---|
| *1: EO represents ethylene oxide. The number represents additional mole number. | |

**[Table 6]**

| | Example 7 | Example 8 | Example 9 | Example 10 | Example 11 | Example 12 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|
| release characteristic (kg) | ⊚ | ⊚ | ⊚ | ⊚ | ⊚ | ⊚ | △ | ⊚ | × | ⊚ | × | △ |
| cell-opening characteristic | ⊚ | ⊚ | ⊚ | ⊚ | ⊚ | ⊚ | ⊚ | ⊚ | × | ⊚ | × | △ |
| surface roughening | ○ | ○ | ○ | ○ | ○ | ○ | △ | ○ | ○ | ○ | △ | × |
| drying characteristic | △ | ○ | ○ | ○ | ○ | ○ | × | ○ | ○ | ○ | ○ | ○ |
| smell | ○ | ○ | ○ | ○ | ○ | ○ | ○ | × | ○ | ○ | ○ | ○ |
| corrosiveness | ○ | ○ | ○ | ○ | ○ | ○ | ○ | × | ○ | ○ | ○ | ○ |
| work environment | ○ | ○ | ○ | ○ | ○ | ○ | × | × | × | × | ○ | ○ |

### Performance Test Method

In order to clarify the performance effects of the present invention, the performance test has been carried out on Examples and Comparative Examples as shown below.
(1) Coating of release agent: metal mold in core-box made of iron (interior size: vertical; 15 cm, horizontal; 20 cm, depth; 5 cm, with lid having a carrying handle) was heated to 50-55°C, the release agent composition was uniformly sprayed (about 30 g per 1m²) by an air-gun and drying for 2 minutes.
(2) Molding of polyurethane foam: 40 weight portions of polyol (MS-300; made by Mitsui Toatsu Chemical, Co., Ltd.) and 20 weight portions of TDI/MDI = 1/1 as raw material were mixed and agitated for 5 seconds at 2000 rpm, and immediately after that, injected into the metal mold, and reacted at 50-55°C with the lid closed. The metal mold was put into the thermostat at 50-50°C and left for 10 minutes including the curing time.
(3) Evaluation of the release characteristic: a spring balance was set at the carrying handle of the above-described mold, and the lid was opened. The applied load was measured.
   Evaluation standard: ⊚ ; 5-10 kg or less, ○; 10-15 kg; Δ; 15-20 kg, and ×; 20 kg or more.
(4) Evaluation for cell-opening characteristic of molding foam: the number of the entire cells within the square of 5cm × 5cm on the surface of the molded urethane foam and whether there are foam breakings of cells or not were visually observed and measured. The cell-opening ratio was made as a ratio of the number of foam breaking cells occupying in the total cell number. The cell-opening characteristic is preferably 60% or more. Evaluation standard: for cell-opening ratio: ⊚ ; 80% or more, ○; 60-80%; Δ; 40-60%, and ×; 40% or less or not cell-opened.
(5) Dry characteristic: The duration from the time when the release agent was sprayed in the mold at the above-described temperature to the time when it was dried was measured. Evaluation standard: ⊚ ; within about 30 seconds, ○; within about 60 seconds, ×; 60 seconds or more.
(6) Smell: the smell at the time when the release agent was sprayed on the mold at the above-described temperature was determined by a human. Evaluation standard: ○; no uncomfortable smell, ×; uncomfortable smell.
(7) Corrosiveness: the moiety of the release agent was put in the sample bottle, in which the degreased iron was immersed. The bottle stood in the thermostat at 65°C for 4 hours, and_the possible occurrence of rust was observed. Evaluation standard: ○; no occurrence of rust, ×; occurrence of rust.
(8) Work environmental characteristic: The vapor pressure at 20°C as the whole composition which was less than 0.01 kPa was represented by ○, and the vapor pressure at 20°C as the whole composition which was 0.01 kPa or more was represented by ×. It should be noted that the composition evaluated as ○ clears the standard of EU conference (COUNCIL DIRECTIVE, 1999/13/EC) concerning with volatile organic solvents. It should be noted that the following URL can be referred to for the relevant standard. http://europa.eu.int/eur-lex/en/consleg/pdf/1999/en_1999L001 3_do_001.pdf See B-17 of pp.5.

## Claims

1. An aqueous release agent composition for molding polyurethane foam, comprising a surfactant, a release substance, and a film forming agent,
**characterized in that** the surfactant is an amino acid salt of alkyl amine.

2. The composition as claimed in Claim 1, in which said amino acid has two sets of carboxyl groups.

3. The composition as claimed in Claim 1 or 2, in which said amino acid is asparaginic acid and/or glutamic acid.

4. The composition as claimed in any one of Claims 1 to 3, herein said alkyl amine, the number of carbon atoms of its alkyl group is in the range from 12 to 24.

5. The composition as claimed in any one of Claims 1 to 4, further comprising a polyethylene glycol type non-ionic surfactant.

6. The composition as claimed in any one of Claims 1 to 4, further comprising a polyethylene glycol type non-ionic surfactant with an additional number of ethylene oxide in the range from 1 to 15 moles.

7. The composition as claimed in any one of Claims 1 to 4, further comprising a polyethylene glycol type non-ionic surfactant with an additional number of ethylene oxide in the range from 5 to 10 moles.

8. The composition as claimed in any one of Claims 1 to 4, in which the blending ratio of amino acid salt of said alkyl amine is in the range from 1 to 50 weight portions with respect to 100 weight portions of said release substance.

9. The composition as claimed in any one of Claims 5 to 7, in which the blending ratio of amino acid salt of said alkyl amine and/or polyethylene glycol type non-ionic surfactant is in the range from 1 to 100 weight portions with respect to 100 weight portions of said release substance.

10. The composition as claimed in any one of Claims 1 to 9, in which said film forming agent is a hydrocarbon compound having a vapor pressure of less than 0.01 kPa at 20°C.

11. The composition as claimed in Claim 10, in which said film forming agent being blended in the range from 5 weight portions or more to less than 100 weight portions with respect to 100 weight portions of said release substance.

12. An aqueous release agent composition for molding polyurethane foam as claimed in Claim 1, comprising a cationic surfactant made of a salt resulting from a reaction between alkyl amine or ethylene oxide adduct of alkyl amine, wherein the additional amount of ethylene oxide with respect to alkyl amine is less than 5 moles, and amino acid.

13. An aqueous release agent composition for molding polyurethane foam as claimed in claim 12, wherein the film forming agent is in the range from 5 to less than 50 weight portions with respect to 100 weight portions of a release substance.

14. A method for manufacturing a urethane foam, said method comprising the steps of:
preparing an aqueous release agent composition for molding a polyurethane foam comprising a surfactant, a substance having release characteristic, and a film forming agent;
forming a film of said composition on inside surface of a mold; and
putting a urethane material into said mold,
**characterized in that** the surfactant is an amino acid salt of alkyl amine.

## Patentansprüche

1. Eine wässrige Trennmittelzusammensetzung zum Formen von Polyurethanschaum, enthaltend eine oberflächenaktive Substanz, ein Trennmittel sowie ein Filmbildungsmittel, **dadurch gekennzeichnet, dass** die oberflächenaktive Substanz ein Aminosäuresalz von Alkylamin ist.

2. Zusammensetzung gemäß Anspruch 1, in der die Aminosäure zwei Sätze an Carboxylgruppen aufweist.

3. Zusammensetzung gemäß Anspruch 1 oder 2, in der die Aminosäure Asparaginsäure und/oder Glutaminsäure ist.

4. Zusammensetzung gemäß einem der Ansprüche 1 bis 3, wobei hier die Anzahl der Kohlenstoffatome der Alkylgruppe des Alkylamins im Bereich von 12 bis 24 liegt.

5. Zusammensetzung gemäß einem der Ansprüche 1 bis 4, des Weiteren enthaltend eine nicht-ionische oberflächenaktive Substanz vom Polyethylenglykol-Typ.

6. Zusammensetzung gemäß einem der Ansprüche 1 bis 4, des Weiteren enthaltend eine nicht-ionische oberflächenaktive Substanz vom Polyethylenglykol-Typ mit einer zusätzlichen Anzahl an Ethylenoxid im Bereich von 1 bis 15 Mol.

7. Zusammensetzung gemäß einem der Ansprüche 1 bis 4, des Weiteren enthaltend eine nicht-ionische oberflächenaktive Substanz vom Polyethylenglykol-Typ mit einer zusätzlichen Anzahl an Ethylenoxid im Bereich von 5 bis 10 Mol.

8. Zusammensetzung gemäß einem der Ansprüche 1 bis 4, in der das Mischungsverhältnis des Aminosäuresalzes des Alkylamins im Bereich von 1 bis 50 Gewichtsteilen im Bezug auf 100 Gewichtsteile des Trennmittels liegt.

9. Zusammensetzung gemäß einem der Ansprüche 5 bis 7, in der das Mischungsverhältnis des Aminosäuresalzes des Alkylamins und/oder der nichtionischen oberflächenaktiven Substanz vom Polyethylenglykol-Typ im Bereich von 1 bis 100 Gewichtsteilen im Bezug auf 100 Gewichtsteile des Trennmittels liegt.

10. Zusammensetzung gemäß einem der Ansprüche 1 bis 9, in der das Filmbildungsmittel eine Kohlenwasserstoffverbindung mit einem Dampfdruck von weniger als 0,01 kPa bei 20°C ist.

11. Zusammensetzung gemäß Anspruch 10, in der das Filmbildungsmittel in einem Bereich von 5 Gewichtsteilen oder mehr bis weniger als 100 Gewichtsteilen in Bezug auf 100 Gewichtsteile des Trennmittels beigemischt ist.

12. Wässrige Trennmittelzusammensetzung zum Formen von Polyurethanschaum gemäß Anspruch 1, enthaltend eine kationische oberflächenaktive Substanz, die aus einem Salz hergestellt ist, das aus einer Reaktion zwischen Alkylamin oder einem Ethylenoxid-Addukt von Alkylamin, wobei die zusätzliche Menge an Ethylenoxid im Bezug zu Alkylamin weniger als 5 Mol beträgt, und Aminosäure hervorgeht.

13. Wässrige Trennmittelzusammensetzung zum Formen von Polyurethanschaum gemäß Anspruch 12, wobei das Filmbildungsmittel in einem Bereich von 5 bis weniger als 50 Gewichtsteilen im Bezug auf 100 Gewichtsteile eines Trennmittels vorliegt.

14. Ein Verfahren zur Herstellung eines Urethanschaums, wobei das Verfahren die folgenden Schritte umfasst:
Herstellung einer wässrigen Trennmittelzusammensetzung zum Formen eines
Polyurethanschaums enthaltend eine oberflächenaktive Substanz, eine Substanz mit Trenneigenschaften sowie ein Filmbildungsmittel;
Ausbilden eines Films aus der Zusammensetzung auf der inneren Oberfläche einer Form; und Geben von einem Urethanmaterial in die Form,
**dadurch gekennzeichnet, dass** die oberflächenaktive Substanz ein Aminosäuresalz von Alkylamin ist.

## Revendications

1. Composition aqueuse d'agent de démoulage pour le moulage d'une mousse de polyuréthane, comprenant un agent tensioactif, une substance de démoulage, et un agent filmogène,
***caractérisée en ce que*** l'agent tensioactif est un sel aminoacide d'alkylamine.

2. Composition selon la revendication 1, dans laquelle ledit aminoacide possède deux groupements carboxyliques.

3. Composition selon la revendication 1 ou 2, dans laquelle ledit aminoacide est l'acide asparaginique et/ou l'acide glutamique.

4. Composition selon l'une quelconque des revendications 1 à 3, dans laquelle le nombre d'atomes de carbone du groupe alkyle de l'alkylamine est compris entre 12 et 24.

5. Composition selon l'une quelconque des revendications 1 à 4, comprenant en outre un agent tensioactif non ionique de type polyéthylène glycol.

6. Composition selon l'une quelconque des revendications 1 à 4, comprenant en outre un agent tensioactif non ionique de type polyéthylène glycol avec une quantité supplémentaire d'oxyde d'éthylène comprise dans une plage de 1 à 15 moles.

7. Composition selon l'une quelconque des revendications 1 à 4, comprenant en outre un agent tensioactif non ionique de type polyéthylène glycol avec une quantité supplémentaire d'oxyde d'éthylène comprise dans une plage de 5 à 10 moles.

8. Composition selon l'une quelconque des revendications 1 à 4, dans laquelle le rapport de mélange du sel aminoacide de ladite alkylamine est compris dans une plage de 1 à 50 parties pondérales pour 100 parties pondérales de ladite substance de démoulage.

9. Composition selon l'une quelconque des revendications 5 à 7, dans laquelle le rapport de mélange du sel aminoacide de ladite alkylamine et/ou de l'agent tensioactif non ionique de type polyéthylène glycol est compris dans une plage de 1 à 100 parties pondérales pour 100 parties pondérales de ladite substance de démoulage.

10. Composition selon l'une quelconque des revendications 1 à 9, dans laquelle ledit agent filmogène est un composé hydrocarboné ayant une pression de vapeur inférieure à 0,01 kPa à 20°C.

11. Composition selon la revendication 10, dans laquelle ledit agent filmogène est mélangé selon un rapport compris dans une plage de 5 parties pondérales, ou plus, jusqu'à moins de 100 parties pondérales, pour 100 parties pondérales de ladite substance de démoulage.

12. Composition aqueuse d'agent de démoulage pour le moulage d'une mousse de polyuréthane selon la revendication 1, comprenant un agent tensioactif cationique fait d'un sel résultant d'une réaction entre une alkylamine ou un produit d'addition d'oxyde d'éthylène et d'alkylamine, dans laquelle la quantité supplémentaire d'oxyde d'éthylène par rapport à l'alkylamine est inférieure à 5 moles, et un aminoacide.

13. Composition aqueuse d'agent de démoulage pour le moulage d'une mousse de polyuréthane selon la revendication 12, dans laquelle l'agent filmogène est compris dans une plage de 5 à moins de 50 parties pondérales pour 100 parties pondérales d'une substance de démoulage.

14. Procédé de fabrication d'une mousse uréthane, ledit procédé comprenant les étapes consistant à :
préparer une composition aqueuse d'agent de démoulage pour le moulage d'une mousse de polyuréthane, comprenant un agent tensioactif, une substance ayant des caractéristique de démoulage, et un agent filmogène ;
former un film de ladite composition sur la surface intérieure d'un moule ; et
mettre un matériau uréthane dans ledit moule,
***caractérisé en ce que*** l'agent tensioactif est un sel aminoacide d'alkylamine.
